# EUROPEAN PATENT SPECIFICATION

(11) **EP 4 677 561 B1**
(45) Date of publication and mention of the grant of the patent: **02.12.2026**
(21) Application number: 24709128.3
(22) Date of filing: 08.03.2024
(51) Int. Cl.: G06V 10/44, G06V 10/74, G06V 10/762, G06V 10/764, G06V 10/778, G06V 10/82, G06V 10/94, G06V 20/69, G06F 18/21, G06F 18/40, G06N 3/0464, G06N 3/091, G06T 7/00

(54) **CLASSIFICATION OF CELL TYPES**
KLASSIFIZIERUNG VON ZELLTYPEN
CLASSIFICATION DE TYPES CELLULAIRES

(30) Priority: 09.03.2023 EP 23161078
(43) Date of publication of application: 14.01.2026
(73) Proprietor: F. Hoffmann-La Roche AG, 4070 Basel (CH); Roche Diagnostics GmbH, 68305 Mannheim (DE)
(72) Inventor: BRUENGGEL, Nils, 6343 Rotkreuz ZG (CH); CONWAY, Patrick, 6343 Rotkreuz ZG (CH)
(74) Representative: Mewburn Ellis LLP
(86) International application number: PCT/EP2024/056277
(87) International publication number: WO 2024/184540

(56) References cited:
- WO-A1-2022/178095
- WO-A1-2022/233916
- HA YAN ET AL: "Fine-grained interactive attention learning for semi-supervised white blood cell classification", BIOMEDICAL SIGNAL PROCESSING AND CONTROL ELSEVIER, AMSTERDAM, NL, vol. 75, 9 March 2022 (2022-03-09), XP087008485, ISSN: 1746-8094, [retrieved on 20220309], DOI: 10.1016/J.BSPC.2022.103611
- MATEK CHRISTIAN ET AL: "Highly accurate differentiation of bone marrow cell morphologies using deep neural networks on a large image data set", BLOOD ELSEVIER, AMSTERDAM, NL, vol. 138, no. 20, 27 July 2021 (2021-07-27), pages 1917 - 1927, XP086867314, ISSN: 0006-4971, [retrieved on 20210727], DOI: 10.1182/BLOOD.2020010568

## Description

### TECHNICAL FIELD OF THE INVENTION

The present invention relates to a computer-implemented method of classifying cell types. More specifically, the present invention relates to a computer-implemented method which shows a user images of cells similar to a classified cell, in order to aid the user's understanding of the classification of that cell.

### BACKGROUND TO THE INVENTION

Modern deep learning networks are very powerful: they can be trained quickly to reach very high accuracy on image classification problems¹. These models consist of millions of parameters and are trained end-to-end, i.e. the training data (in the form of images and labels) is used directly to optimize their parameters. No features are extracted from the images before "showing" it to the model. This is the reason that these kinds of models are often treated as black boxes for which we cannot explain classification.
**¹** Krizhevsky, Alex & Sutskever, Ilya & Hinton, Geoffrey. (2012). ImageNet Classification with Deep Convolutional Neural Networks. Neural Information Processing Systems. 25. 10.1145/3065386**.**

Interpretability of deep learning models has been a subject of active research for some years. However, the inventors have found that many of the proposed methods are at most useful as a debugging tool, but are unable to provide a meaningful explanation of why a particular classification was made. For example, saliency maps only highlight the area that has the most influence for a classification (e.g. the dog in a dog classifier, but with no explanation why the model chose the class "dog" over other mammals). For some methods, it has been shown that the proposed methods are insensitive to the parameters of that model².
² htts://arxiv.org/abs/1810.03292

WO2022178095 A1 relates to systems and methods for cell analysis.

### SUMMARY OF THE INVENTION

At a high level, the present invention provides a computer-implemented method of classifying cell types using a classifier model, the computer-implemented method further comprising steps in which cells from a reference set of cells which are most similar to the classified cell are identified and displayed to a user. In this manner, a user such as a clinician is able to gain a better insight into the reasons why a particular cell is classified in the manner it is.

Accordingly a first aspect of the present invention provides a computer-implemented method **as set out in claim** 1.

In various implementations of the present invention, the reference images may take different forms. For example, in some cases, the one or more reference images may comprise the plurality of training images which form part of the training data. Additionally, or alternatively, the one or more reference images may comprise reference images stored in or retrieved from a reference image database. The reference images stored in the reference image database may be the same as the plurality of digital training images, or may include additional reference images. Essentially, the term "one or more reference images" may be understood to refer to any set of pre-existing digital images depicting a cell.

We now discuss in some more detail the process by which the most similar reference images are identified. Specifically, determining one or more digital training images which depict cells most similar to the cell depicted in the digital test image may comprise: calculating a value of a similarity metric indicative of the degree of similarity between the digital test image, and each of a plurality of digital reference images; and selecting a subset of the plurality of digital reference images for which the value of the similarity metric indicates the highest degree of similarity with the digital test image, the selected subset being the one or more digital reference images which depict cells most similar to the cell depicted in the digital test image. In some cases, selecting the subset of the plurality of digital reference images may comprise ranking the plurality of digital reference images based on the values of their similarity metric, and a selecting a predetermined number of the highest ranked digital reference images, the selected predetermined number being the selected subset.

The similarity metric may relate to the image data which represents the digital training images or digital reference images. More details about the similarity metric are provided later in this application.

Herein, the term "classifier model" is used to refer to a machine-learning model which takes as its input an image, and is configured to output a classification of an object depicted in that image, in this case a cell. In order effectively to train a machine-learning model such as a classifier model, it is often necessary to use many thousands of training images. In those cases in which the reference images are or comprise the digital training images, after the digital test image has been classified, identifying one or more reference images which are most similar to the digital test image may require a calculation of the value of the similarity metric between the digital test image and potentially many thousands of digital reference images, which may be computationally unfeasible.

In order to avoid this, the digital training images may comprise a first subset of digital training images and a second subset of digital training images, wherein only the first subset of the digital training images form part of the plurality of digital reference images. In other words, selecting a subset of the plurality of reference images may comprise selecting a subset of the plurality of digital training images from the first subset of digital training images only. By only establishing a similarity metric with a subset of the digital training images, computation times can be reduced. The first subset may be selected specifically to show a range of all cell types, to ensure that the image or images displayed to the user include a cell of the same type as the cell type of the digital test image. Analogously, the reference image database may comprise a reduced number of reference images relative to the digital training images, in order to reduce the computational power required to identify the most similar reference image(s). The reference image database may comprise 10 to 100,000 images, 100 to 10,000 images, 500 to 5,000 reference images, 800 to 2,000 images, 900 to 1,500 images, or preferably about 1,000 images. Herein, "about" may be interpreted as meaning "within 10% of".

The classifier model may comprise various sub-models. For example, the classifier model **comprises** an encoder sub-model (which term can be used interchangeably with just "encoder" throughout this application) which is configured to generate a latent representation of the received image data in terms of a plurality of latent variables. In the context of the present invention, the term "latent variable" refers to a quantifiable property of the image data which is not necessarily immediately visible to a human. In other words, they can only be inferred directly via mathematical operations on the data, and do not necessarily (but may) correspond to observable variables. The latent variables may themselves be in the form of vectors, and the latent representation may comprise a plurality of weights which may be applied to each of these latent variables in order to reconstruct the original digital image data. It is inherent in the encoding process that it is not generally possible to reconstruct the digital image data completely using the latent representation, but rather that it enables an approximate reconstruction based on the most important latent variables.

In those implementations of the invention involving an encoder-generated hidden representation of the digital image data, the similarity metric may be calculated based on the latent representation of the received image data, and the latent representation of the reference image data representing each of the digital reference images. More specifically, the similarity metric may be a distance in N-dimensional space between the latent representation of the digital image data, and a latent representation of the image data representing a respective digital reference image. N may be the number of dimensions in the latent representation, i.e. the number of latent variables in the latent representation. Alternatively, only a subset of the latent variables may be used, in which case N may be any number less than the number of latent variables in the latent representation, selected to be most suitable. The difference may be a Euclidean distance (in which the overall distance is calculated as the square root of the sums of the squares of the distance in each dimension, which generalizes to e.g. Pythagorean addition in two dimensions), a Manhattan distance (which, in N-dimensional real vector space with a fixed Cartesian coordinate system is the sum of the lengths of the projections of the line segment between the points onto the coordinate axis³), or a cosine difference (the dot product of the two vectors divided by the product of their lengths, to give a cosine value indicative of the similarity between the two vectors).

The classifier model **further comprises** a cell type classification sub-model, configured to determine and output a cell type of the cell depicted in the digital test image based ³ ${d}_{M} \left(x, y\right) = {\sum }_{i - 1}^{N} \left|{p}_{i}-{q}_{i}\right|$ on the latent representation of the received image data generated by the encoder sub-model.

The classifier model may be an artificial neural network. In some cases, the encoder sub-model may comprise one or more convolutional layers. The cell type classification sub-model may comprise one or more fully-connected layers. Accordingly, the classifier model may be in the form of, or may comprise a *ResNet* model, such as a *ResNet18, ResNet34, ResNet50,* or *ResNet101.* It will be appreciated that other kinds of *ResNet* classifier models are available and suitable for this purpose.

The process by which the classifier model may be trained has been outlined elsewhere in this patent application. As discussed, the classifier model may comprise an encoder and a classification sub-model. Training the classifier model may comprise both training the encoder and training the classification sub-model. Training the encoder portion may rely only on the training image data of each record, since the role of the encoder is only to generate a representation of that training image data in terms of latent variables. Training the classifier **comprises** using spectral normalization, which aids regularization of the classifier model, and may lead to neater clusters of semantically close data points.

Spectral normalization⁴ technique which is generally used for training encoders as part of generative adversarial networks (GANs), but is equally applicable to the present invention. It has the property that the Lipschitz constant is the only hyper-parameter to be tuned. Amersfoot et *al.* (2021)⁵ documents the problem of feature collapse, in which points collapse to a line because of unconstrained training with a simple classification objective. The spectral norm of a matrix is the maximum singular value of a matrix M, i.e. the largest square root of the eigenvalues of *M^{T} M,* where *M^{T}* represents the adjoint or transverse of a matrix M. This can be generalized to higher order, i.e. tensorial, operators. The use of spectral normalization keeps the weights within bi-Lipschitz constraints, thereby avoiding feature collapse.
⁴ https://doi.org/10.48550/arXiv.1802.05957
⁵ https://doi.org/10.48550/arXiv.2102.11409

Training of the classifier model may comprise retrieving or receiving the training data, each record of the training data comprising: image data representing a digital training image depicting a cell; and a label indicative of the cell type of the cell depicted in the digital training image. Then, in a first step, the training image data may be fed through the (at that point untrained) classifier model to obtain a classification prediction for each image. Naturally, at this point, because the model has not been trained, it is unlikely that the predictions will be correct. Accordingly, in a next step, a loss function may be calculated for each digital training image, using the label indicative of the cell type of the cell depicted in that training image. Then, the gradient of the cost function (i.e. the average error across a batch of training data, which may contain, for example 32, 64, or 128 records of the training data, and in some cases the average error may be calculated using images which are lower resolution than the training images) is calculated, and used to update the weights across the classifier model. This process may then be repeated until an end criterion is met, e.g. the model converges, or after a predetermined number of epochs. When using spectral normalization, before the process is repeated, two additional steps may be executed. First, for each layer of the classifier model, the spectral norm (defined above) may be calculated. Then, the weights of each layer may be divided by the spectral norm. This ensures that the weights are kept within the bi-Lipschitz constraints. After these steps have been executed the process may be repeated as usual.

The present invention is directed towards classification of cell types. Accordingly, the classifier model may be configured to classify the cell as one of: a promyelocyte, a myelocyte, a metamyelocyte, a band neutrophil, a neutrophil, an eosinophil, a basophil, a monocyte, a lymphocyte, an abnormal lymphocyte, an atypical lymphocyte, a blast, and a nucleated red blood cell.

A further aspect of the invention provides a diagnostic support system **as set out in claim** 9.

A further **unclaimed aspect** of the **disclosure** provides a computer-implemented method of refining a trained classifier model configured to classify cells based on image data representing an image depicting one or more cells: receiving training data comprising a plurality of digital records, each digital record comprising: training image data representing a digital training image depicting a cell; and a label indicative of the cell type of the cell depicted in the digital training image; training a classifier model to classify a cell type of a cell depicted in a digital test image, based on image data representing the digital test image, to generate a trained classifier model; receiving image data representing a digital test image, the digital test image depicting a cell; applying the trained classifier model to the received image data, the classifier model configured to output a cell type of the cell depicted in the digital test image; determining one or more digital training images which depict cells most similar to the cell depicted in the digital test image; generating instructions which, when executed by a display component of a computing device, cause the display component to display: the cell type output by the classifier model; and the determined one or more of the digital training images, and their respective cell types; receiving input from a clinician indicative of whether the cell type output by the classifier model is correct; and updating the classifier model based on one or more received clinician inputs, thereby refining the classifier model. Herein, "updating the classifier model" may comprise modifying or updating (e.g. adding to) the training data based on the input from the clinician. Then, the classifier model may be retrained using the modified training data. A further aspect of the invention may comprise a diagnostic support system for identifying cell types within a specimen image, the diagnostic support system comprising: a processor, and a display component, wherein the processor is configured to execute the computer-implemented method of refining a trained classifier model configured to classify cells; and the processor is configured to transmit the generated instructions to the display component.

Implementations of these aspects of the invention enable the use of a clinician's input to refine the model.

A further aspect of the invention provides a computer-implemented diagnostic support method, **as set out in claim** 10.

The computer-implemented method may further comprise generating instructions, which when executed by a display component of a computing device, cause it to display images corresponding to the identified subsets of image data. Implementations of this aspect of the invention enable a clinician, when reviewing a specimen image, automatically to identify cells which are similar to a selected cell. By displaying all cells which are similar to a selected cell, a clinician is able to make an assessment or diagnosis based only on relevant information. The ergonomics of the diagnostic process are improved, since the user is able to retrieve, straightforwardly, all similar cells, and then to make a diagnosis based on those cells.

In some cases, in addition to providing a more ergonomic diagnostic process for a clinician, the computer-implemented method of this aspect of the invention may be used to update the training data set, based on the clinician inputs. Broadly, this may be achieved by seeking input from a clinician in the event that the trained classifier model is not able to identify a cell type in question. Then, the clinician may be asked to identify the cell type, and then may be presented with images of cells similar to the cell type in question, and asked to identify whether these cells should receive the same classification. More specifically, as before, the trained classifier model may comprise the encoder and a cell type classification sub-model configured to determine an output a cell type of the cell depicted in a digital test image based on a latent representation of the received image data generated by the encoder. Then, the computer-implemented method may further comprise: applying the cell type classification sub-model to the selected subset of image data or the subset of image data representing the selected cell indicated in the first user input; determining whether the classification sub-model is able to determine the cell type of the cell represented by the selected subset of image data or the subset of image data representing the selected cell indicated in the first user input; if the classification sub-model is not able to determine the cell type, generating instructions which, when executed by a display component of a computing device, cause the display component to request a second user input identifying the cell type; in response to receiving the second user input identifying the cell type, retrieving the stored data identifying the one or more subsets of image data for which the similarity metric indicates the highest degree of similarity to the selected subset of image data or the subset of image data representing the selected cell; generating instructions, which when executed by a display component of a computing device, cause it to display: images corresponding to the identified one or more subsets of image data for which the similarity metric indicates the highest degree of similarity to the selected subset of image data or the subset of image data representing the selected cell; and for each image, a request for a third user input to confirm whether that image should be classified as the same cell type indicated in the same classification received in the second user input; and updating the training data based on the plurality of received third user inputs. The computer-implemented method may further comprise retraining the classifier model based on the updated training data. A further aspect of the invention provides a diagnostic support system comprising a processor configured to execute the computer-implemented diagnostic support method; and a display component, wherein the processor is configured to transmit the generated instructions to the display component.

Classifier models are generally configured to output a classification and a score from 0 to 1 (or equivalent) representing the likelihood that the cell is that type . For example, an output of 1 may indicate that the classifier model is certain of its classification, and an output of 0.5 may indicate only 50% confidence. In implementations of the computer-implemented method of this aspect of the invention, determination of whether the classifier model is able to determine the cell type may be based on a threshold confidence, probability or likelihood. Specifically, the classification sub-model may be configured to output a cell type and an auxiliary value indicative of the probability, likelihood, or confidence that the outputted cell type is the correct cell type. Determining whether the classification sub-model is able to determine the cell type may comprise comparing the auxiliary value with a predetermined threshold value, wherein if the auxiliary value is greater than or equal to the predetermined threshold value, it is determined that the classification sub-model has been able to determine the cell type. And, if the auxiliary value is less than the predetermined threshold value, it is determined that the classification sub-model has not been able to determine the cell type. Alternatively, the auxiliary value may correspond to an uncertainty score, in which case if the auxiliary value is less than to the predetermined threshold value, it is determined that the classification sub-model has been able to determine the cell type. And, if the auxiliary value is greater than or equal to the predetermined threshold value, it is determined that the classification sub-model has not been able to determine the cell type.

The user input may comprise selection of a cell in the specimen image (e.g. using a computer mouse or equivalent). The processor may generate instructions which when executed by the display component cause it to output a version of the specimen image in which a predetermined number of the most similar cells are highlighted or otherwise indicated. Alternatively, the most similar cells may be displayed in a separate window. Enlarged versions of the cells may be superimposed over their locations in the specimen image, enabling the user both to see a larger version of the cells and note its location. In some cases (note that this applies to all aspects of the invention), the determined one or more most similar cells may be displayed in a location close to the cell of interest (e.g. the cell indicated by a user input, or the cell depicted in the digital test image). For example, on identification of the similar cells, these cells may be displayed surrounding (e.g. contiguously) the cell of interest, such that images of cells which are not determined to be the one or more most similar cells are further from the cell of interest than the determined one or more most similar cells. Diagnosis of various conditions is generally based on classification of a population of cell types, rather than individual cells. For example, it is unlikely that leukaemia would be identified based on the classification of a single cell. This means that in a specimen image of a subject with a certain condition, there would be a plurality of abnormal (or otherwise interesting) cells. By displaying the most similar cells to the cell of interest (i.e. the other abnormal cells) close to the cell of interest, and excluding the non-similar cells (i.e. those cells not determined to be the one or more most similar cells) from a similar region of the display component, the clinician is able to make an assessment more ergonomically, and as a result, more accurately.

The predetermined number may be, for example, a predetermined number N of cells with the highest value of the similarity metric. N may be adjustable based on a user input. Alternatively, the predetermined number of cells may comprise all of the cells in the specimen image for which the similarity metric exceeds a threshold value. The threshold value may be predetermined or adjustable based on a user input. In these cases, the user input may be continuously adjustable, e.g. using a tool on a graphical user interface such as a slider. This enables the user to flexibly display a varying number of most similar cells.

The invention includes the combination of the aspects and preferred features described except where such a combination is clearly impermissible or expressly avoided.

### BRIEF DESCRIPTION OF THE DRAWINGS

Embodiments of the present invention will now be described with reference to the accompanying drawings, in which:
- Fig. 1 is a schematic diagram of a system which may be configured to implement a computer-implemented method according to an aspect of the present disclosure.
- Fig. 2 is a flow diagram illustrating a computer-implemented method according to an aspect of the disclosure.
- Fig. 3 is a flow diagram illustrating a process by which one or more similar reference images may be identified in some implementations of the computer-implemented methods of the present disclosure.
- Fig. 4 is a schematic diagram of a classifier model which may be used in some implementations of computer-implemented methods of the present disclosure.
- Figs. 5A to 8B are results obtained by computer-implemented methods according to the first aspect of the present disclosure.

### DETAILED DESCRIPTION OF THE DRAWINGS

Aspects and embodiments of the present invention will now be discussed with reference to the accompanying figures. Further aspects and embodiments will be apparent to those skilled in the art.

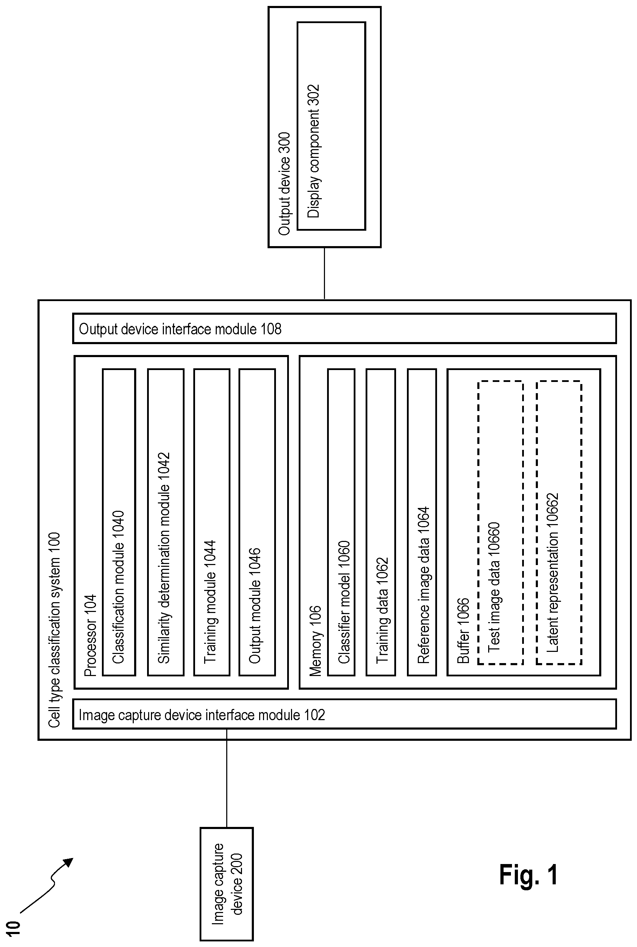

Fig. 1 shows a system 10 which may be used to execute various computer-implemented methods of the present invention. The system 10 includes a cell type classification system 100, an image capture device 200 and an output device 300. It should be noted that the cell type classification system 100 may alternatively be referred to as a diagnostic support system. These may all be separate components. In such cases, they may be connected via come kind of network (not shown), via a wireless connection, a wired connection, or a mixture of the three. When the cell type classification system 100, the image capture device 200 and the display component 300 are connected via a network, the network may be a wireless network such as a wireless Internet connection, a Wi-Fi network, a cellular network, or any equivalent network. Alternatively, the network may be a wired network such as a LAN, a wired Internet connection, or a WLAN. The skilled person readily appreciates that other kinds of network connection are possible.

We now discuss the cell type classification system 100 in more detail, which may be used to implement the present invention. It will be noted that the cell type classification 100 includes several "modules". The cell type classification 100 as a whole may be implemented either in the form of bespoke hardware, or more likely the classification 100 may be implemented in software, for example in the form of computer-readable code comprising instructions which, when executed, causes a computer to execute the various functions described herein. Similarly, the modules (described in more detail later) may also be implemented in the form of hardware modules within the processor 104, but may be implemented in the form of software modules, each represented, for example, by a respective section of computer code comprising instructions which, when executed, cause the computer to execute the respective function associated with that module. In this sense, the modules may be interpreted as "functional modules", which may be implemented in any computer-based manner, such that they are able to execute the function with which they are associated. In an abundance of caution, we note that the whole of the cell type classification system 100 may be implemented on a general-purpose computer such as a desktop computer, a laptop computer, a smartphone, a tablet, or the like.

The cell type classification system 100 includes image capture device interface module 102, processor 104, memory 106, and output device interface module 108. As the name suggests, the purposes of the image capture device interface module 102 and the output device interface module 108 are to interface with the image capture device 200, and the output device 30, respectively. The image capture device interface module 102 and the output device interface module 108 may be implemented in any suitable form, be it a software module, a physical interface (such as a USB connection, or similar), or a network component configured to receive data-containing signals from the first image capture device 200, or the output device 300. The image capture device interface module 102 and the output device interface module 108 may be the same component.

The processor 104 contains a variety of sub-modules, comprising a classification model 1040, a similarity determination module 1042, a training module 1044, and an output module 1046. The specific implementation of the cell type classification system 100 shown in Fig. 1 is an illustrative example only, and it will be appreciated from the preceding disclosure that the processor 104 of the cell type classification system 100 need not include some or all of the modules, or alternatively, may include any sub-combination of modules. All sub-combinations are envisaged.

The memory 106 stores a classifier model 1060, training data 1062, reference image data 1064, and a buffer 1066. At certain points, the buffer 1066 may contain test image data 10660, and a latent representation 10662. The specific implementation of the cell type classification system 100 shown in Fig. 1 is an illustrative example only, and it will be appreciated from the preceding disclosure that the memory 106 of the cell type classification system 100 need not include some or all of the stored items shown, or alternatively, may include any sub-combination of stored items. All sub-combinations are envisaged.

We now discuss the method itself, which may be executed by the system of Fig. 1, specifically, the cell type classification system 100 thereof. Of course, methods or computer-implemented methods of the present invention may be executed by hardware or software arranged differently from the cell type classification system 100 of Fig. 1, but we refer to this example in the following disclosure.

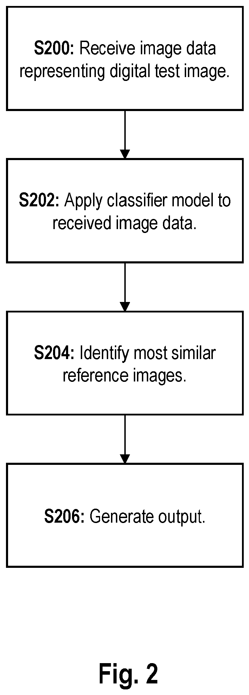

Fig. 2 is a flowchart illustrating a computer-implemented method according to one aspect of the invention. In a first step S200, image data is received, the image data representing a digital test image. The test image data may be stored (temporarily) in buffer 1066 of memory 106 as test image data 10660. Specifically, the test image data 10660 may be received from the image capture device 200 via the image capture device interface module 102 of the cell type classification system 100.

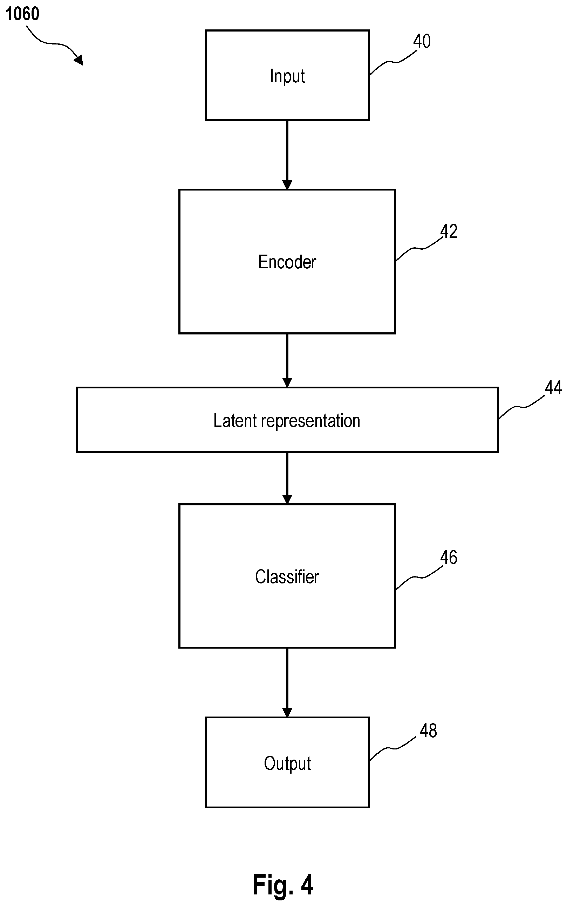

Then in step S202, the classification module 1040 may retrieve the classifier model 1060 from the memory 106, and apply it to the temporarily stored test image data 10660. Fig. 4 shows a high-level schematic diagram of a classifier model which may be used in implementations of the computer-implemented method of the present invention. The classifier model 1060 broadly includes five stages: an input 40, an encoder 42, a latent representation 44, a classifier 46 and an output 48. The input 40 may take the form of the test image data 10660. The encoder 42 preferably comprises a plurality of layers, each layer comprising a plurality of nodes. The layers may be in the form of one or more convolutional layers. By applying one or more convolutional layers to the input in the encoder 42, it is possible to generate the latent representation 44 of the test image data 10660. The latent representation 44 is a representation of the test image data 10660 in terms of a plurality of latent variables. The latent variables do not necessarily correspond to variables which are discernible or observable by a human. In theory, it should be possible to recreate the test image data 10660 (or at least a good representation thereof) using a combination of the latent variables in the latent representation 44. After the latent representation 44 has been generated using the encoder 42, the classifier portion 46 of the classifier model 1066 is applied. The function of the classifier portion 46, as the name suggests, is to determine a cell type based on the latent representation 44. The cell type then forms the output 48. It must be stressed that this is just a high-level example of a kind of classifier model 1060 which may be used in implementations of the present invention. Other classifier models 1060 may also be used, such as *Resnet* models.

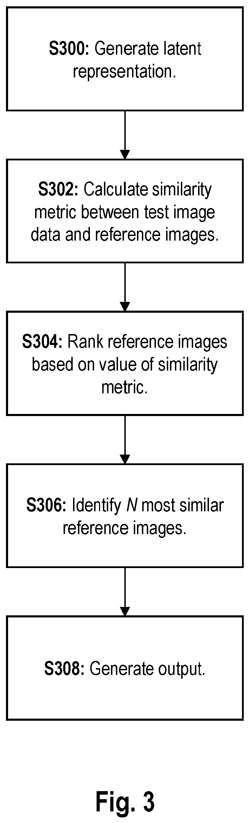

Returning to Fig. 2, in step S204, the most similar reference images in the reference image database 1064 are identified. This process may take place at any point after the latent representation 44 has been generated through the application of the classifier model 1060 in step S202. The cell type output 48 is not required in order to perform step S204. However, it may be performed afterwards. Or, step S204 may be executed in parallel with the layer stages of the classifier model 106. An example of a process by which the most similar images in the reference image database 1064 may be identified is shown in Fig. 3, and will be explained now.

In step S300, the latent representation e.g. 44 is generated. This may be stored in the buffer 1066 of the memory 106 as latent representation 10662. The generation in step S300 may be executed in the manner outlined previously, or using any other valid method. In step S302, the similarity determination module 1042 may then determine the value of a similarity metric between the test image data 10660 and the reference image data 1064 stored in the memory 106. The latent representation 10662 may be in the form of a plurality of values, each value representing a latent variable in the latent representation 10662. Accordingly, the latent representation 10662 may be in the form of a large multidimensional array of data. Corresponding latent representations may be generated for each of the reference images, i.e. for each image represented in the reference image data 1064. In some cases, latent representations, or more specifically data representing these latent representations may also be stored in reference image data 1064 in association with the respective image data.

In step S302, the similarity metric may be calculated for each reference image, based on the latent representation 10662 and the latent representation of each reference image. As discussed, the similarity metric may be in the form of a Euclidean distance, a Manhattan distance, or a cosine distance, all of which are generalized distance metrics in multidimensional space. Then, in step S304, the reference images represented by reference image data 1064 are ranked according to the value of the calculated similarity metric, and in step S306, the N most similar reference images are identified, where N is e.g. predetermined value, or is adjustable by a clinician based on an input. After the most similar reference images are identified, they are output in step S308.

Returning now to Fig. 2, in step S206, an output is generated, e.g. by the output module 1046. The output may comprise the cell type classification of the test image data 10660, and the N identified most similar reference images.

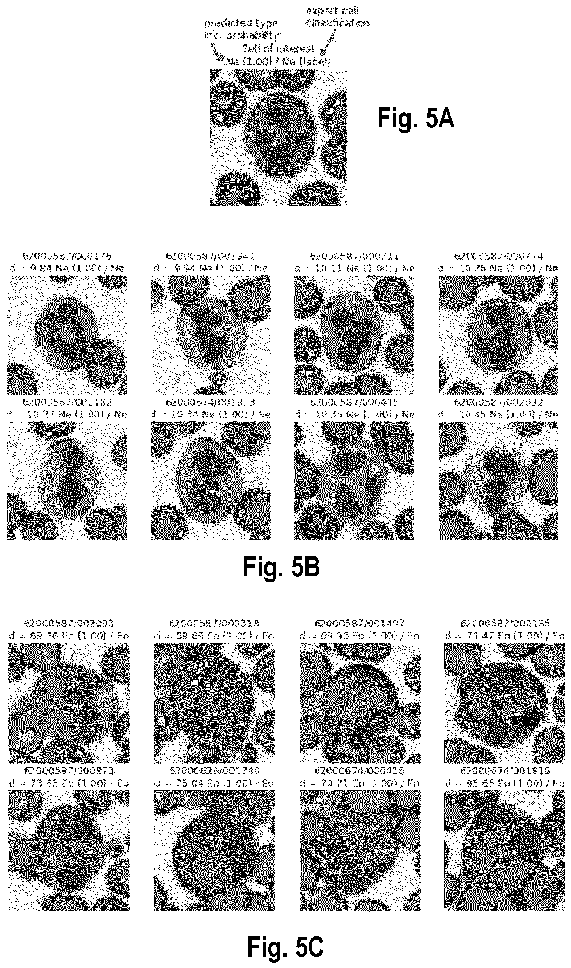

Fig. 5A to 8B show examples of results which may be obtained using computer-implemented methods according to the present invention.

Fig. 5A shows a first example of a digital test image (the "Cell of interest"), which depicts a characteristic neutrophil. Fig. 5A also includes a predicted cell type, i.e. an output of a classification process, along with a probability that the cell is that type. In Fig. 5A, the cell has been identified as a neutrophil with 100% confidence. The image also shows an expert cell classification (i.e. a classification determined by an expert human). Fig. 5B shows a set of eight cells from the training set (or equivalently, from a reference image set) which most closely match the cell of interest. From this, it will be observed that all of the cells are neutrophils closely resembling the test image, thus demonstrating that the computer-implemented method of the present invention is able effectively to identify similar cells in a reference data set. Fig. 5C shows a set of eight cells from the training set (or equivalently, from a reference image set) which least closely match the cell of interest, in this case, it can be seen that the most distant cells are all eosinophils, which are morphologically very different from neutrophils.

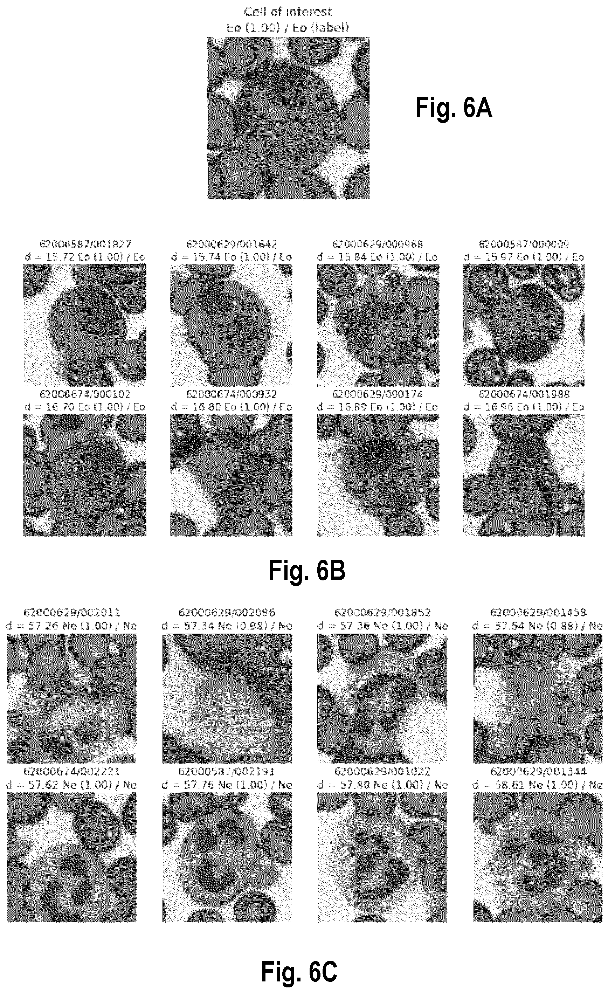

Figs. 6A to 6C demonstrate something similar. In Fig. 6A, the cell has been identified as an eosinophil with 100% confidence. The image also shows an expert cell classification (i.e. a classification determined by an expert human). Fig. 6B shows a set of eight cells from the training set (or equivalently, from a reference image set) which most closely match the cell of interest. From this, it will be observed that all of the cells are eosinophils closely resembling the test image, thus demonstrating that the computer-implemented method of the present invention is able effectively to identify similar cells in a reference data set. Fig. 6C shows a set of eight cells from the training set (or equivalently, from a reference image set) which least closely match the cell of interest, in this case, it can be seen that the most distant cells are all neutrophils, which are morphologically very different from eosinophils.

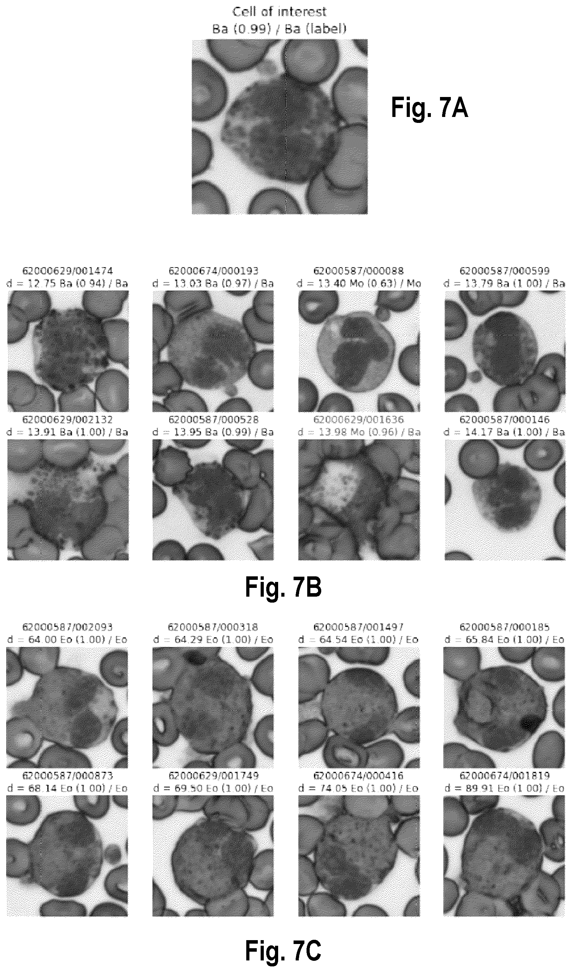

Neutrophils and eosinophils are relatively common in the white blood cell population. Basophils are rarer, and thus less represented in the training data set. Fig. 7A shows a digital test image of a basophil, identified by the classifier model with 99% confidence. Fig. 7B shows a set of eight cells from the training set (or equivalently, from a reference image set) which most closely match the cell of interest. From this, it will be observed that seven of the cells are basophils (one being a damaged basophile incorrectly identified as a monocyte by the classifier), and one monocyte. Fig. 7C shows the least similar cells, which are all eosinophils. This is to be expected, because eosinophiles are most morphologically different from other kinds of white blood cell.

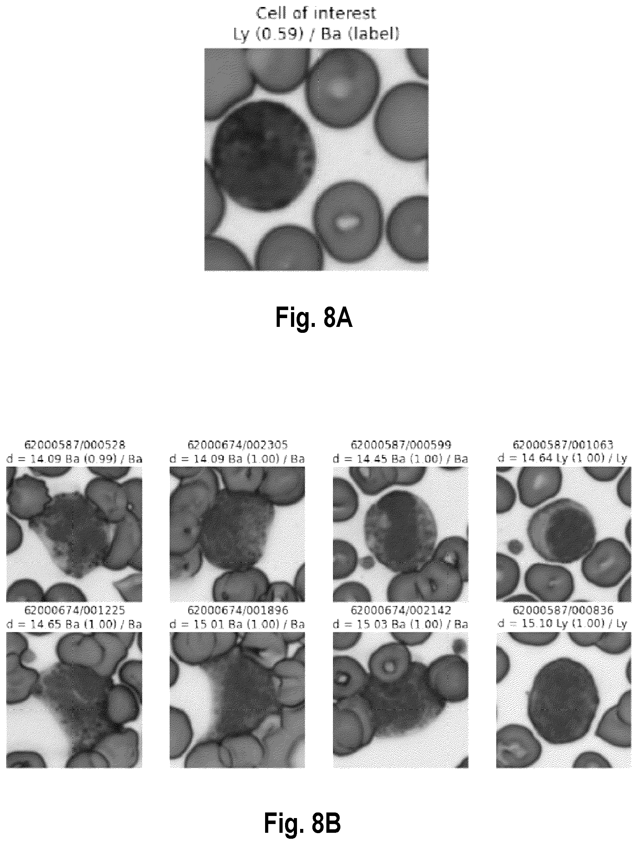

Figs. 8A and 8B show an interesting different example, which demonstrates the effectiveness of the present invention as part of a diagnostic support tool. Fig. 8A shows the cell of interest. It may be seen that it is a basophil which has been incorrectly classed as a lymphocyte by the classifier. However, Fig. 8B shows the eight most similar cells from the reference data set. Of these, six are basophils and two are lymphocytes. Thus, when implementing the present invention as part of a diagnostic support system, a clinician would be presented with a series of images of basophils, even though the classifier incorrectly identified the cell as a lymphocyte. In this manner, the present invention aids the clinician in making the correct assessment.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of classifying cell types, the computer-implemented method comprising:
receiving (S200) image data (10660) representing a digital test image, the digital test image depicting a cell;
applying (S202) a classifier model (1060) to the received image data (10660), the classifier model (1060) configured to output a cell type of the cell depicted in the digital test image, wherein:
the classifier model (1060) comprises:
an encoder sub-model comprising one or more convolutional layers, the encoder sub-model configured to generate a latent representation (10662) of the received image data (10660) in terms of a plurality of latent variables; and
a cell type classification sub-model configured to determine and output a cell type of the cell depicted in the digital test image based on the latent representation (10662) of the received image data (10660) generated by the encoder sub-model, the cell-type classification sub-model comprising one or more fully-connected layers; and
the classifier model (1060) has been trained using training data (1062) comprising a plurality of digital records, each digital record comprising:
training image data representing a digital training image depicting a cell; and
a label indicative of the cell type of the cell depicted in the digital training image; and
determining (S204) one or more digital reference images (1064) which depict cells most similar to the cell depicted in the digital test image, wherein reference images (1064) are pre-existing digital images depicting a cell;
generating (S206) instructions which, when executed by a display component of a computing device, cause the display component to display:
the cell type output by the classifier model (1060); and
the determined one or more digital reference images (1064) which depict cells most similar to the cell depicted in the digital test image,
**characterized in that** the classifier model (1060) has been trained using spectral normalization.

2. The computer-implemented method of claim 1, wherein:
determining (S204) one or more digital reference images (1064) which depict cells most similar to the cell depicted in the digital test image comprises:
calculating (S302) the value of a similarity metric indicative of the degree of similarity between the digital test image and each of a plurality of digital reference images (1064); and
selecting a subset of the plurality of digital reference images for which the value of the similarity metric indicates the highest degree of similarity with the digital test image, the selected subset being the one or more digital reference images (1064) which depict cells most similar to the cell depicted in the digital test image.

3. The computer-implemented method of claim 1 or claim 2, wherein:
the one or more reference images (1064) comprise the plurality of training images which form part of the training data (1062).

4. The computer-implemented method of claim 3, wherein:
the plurality of digital training images comprises a first subset of digital training images and a second subset of digital training images; and
selecting a subset of the plurality of digital training images comprises selecting a subset of digital training images from the first subset of digital training images only.

5. The computer-implemented method of claim 1, wherein:
the similarity metric is calculated based on the latent representation (10662) of the received image data (10660) and a latent representation (10662) of the reference image data representing each of the digital reference images (1064).

6. The computer-implemented method of claim 5, wherein:
for each digital reference image, the similarity metric is a distance in N-dimensional space between the latent representation (10662) of the received image data (10660) and a latent representation (10662) of that digital reference image, in which *N* is the number of dimensions in the latent representation (10662).

7. The computer-implemented method of claim 6, wherein:
the distance in N-dimensional space is a Euclidean distance, a Manhattan distance, or a cosine distance.

8. The computer-implemented method of any one of claims 1 to 7, wherein:
the classifier model (1060) is configured to classify the cell as one of: a promyelocyte, a myelocyte, a metamyelocyte, a band neutrophil, a neutrophil, an eosinophil, a basophil, a monocyte, a lymphocyte, an abnormal lymphocyte, an atypical lymphocyte, a blast, and a nucleated red blood cell.

9. A diagnostic support system (10) for identifying cell types within a specimen image, the diagnostic support system (10) comprising:
a processor (104); and
a display component (302), wherein:
the processor (104) is configured to execute the computer-implemented method of any one of claims 1 to 8; and
the processor (104) is configured to transmit the generated instructions to the display component (302).

10. A computer-implemented diagnostic support method, the computer-implemented diagnostic support method comprising:
receiving image data (10660) representing a specimen image depicting a plurality of cells, the image data (10660) comprising a plurality of subsets of image data (10660), each subset of image data (10660) representing a portion of the specimen image depicting a single cell of interest;
applying an encoder of a trained classifier model (1060), the encoder comprising one or more convolutional layers, to each of the subsets of image data (10660), wherein the encoder has been trained to generate a respective latent representation (10662) of each subset of image data (10660) in terms of a plurality of latent variables;
receiving a first user input selecting a cell in the specimen image or a subset of image data (10660) representing a cell in the specimen image;
determining a respective value of a similarity metric indicative of the degree of similarity between the selected subset of image data (10660) or the subset of image data (10660) representing the selected cell, and each of the other subsets of image data (10660), based on the respective latent representations (10662) of the subsets of image data (10660);
identifying one or more subsets of image data (10660) for which the similarity metric indicates the highest degree of similarity to the selected subset of image data (10660) or the subset of image data (10660) representing the selected cell; and
storing, in a memory, data identifying the one or more subsets of image data (10660) for which the similarity metric indicates the highest degree of similarity to the selected subset of image data (10660) or the subset of image data (10660) representing the selected cell,
**characterized in that** the classifier model (1060) has been trained using spectral normalization.

11. The computer-implemented method of claim 10, wherein:
the trained classifier model (1060) comprises the encoder comprising one or more convolutional layers and a cell type classification sub-model comprising one or more fully-connected layers, the cell-type classification sub-module configured to determine and output a cell type of the cell depicted in a digital test image based on a latent representation (10662) of the received image data (10660) generated by the encoder;
the computer-implemented method further comprises:
applying the cell type classification sub-model to the selected subset of image data (10660) or the subset of image data (10660) representing the selected cell indicated in the first user input;
determining whether the classification sub-model is able to determine the cell type of the cell represented by the selected subset of image data (10660) or the subset of image data (10660) representing the selected cell indicated in the first user input;
if the classification sub-model is not able to determine the cell type, generating instructions which, when executed by a display component of a computing device, cause the display component to request a second user input identifying the cell type;
in response to receiving the second user input identifying the cell type, retrieving the stored data identifying the one or more subsets of image data (10660) for which the similarity metric indicates the highest degree of similarity to the selected subset of image data (10660) or the subset of image data (10660) representing the selected cell;
generating instructions, which when executed by a display component of a computing device, cause it to display:
images corresponding to the identified one or more subsets of image data (10660) for which the similarity metric indicates the highest degree of similarity to the selected subset of image data (10660) or the subset of image data (10660) representing the selected cell; and
for each image, a request for a third user input to confirm whether that image should be classified as the same cell type indicated in the same classification received in the second user input; and
updating the training data (1062) based on the plurality of received third user inputs.

12. The computer-implemented method of claim 11, further comprising:
retraining the classifier model (1060) based on the updated training data (1062).

## Patentansprüche

1. Computerimplementiertes Verfahren zum Klassifizieren von Zelltypen, wobei das computerimplementierte Verfahren Folgendes umfasst:
Empfangen (S200) von Bilddaten (10660), die ein digitales Testbild darstellen, wobei das digitale Testbild eine Zelle abbildet;
Anwenden (S202) eines Klassifizierermodells (1060) auf die empfangenen Bilddaten (10660), wobei das Klassifizierermodell (1060) konfiguriert ist, um einen Zelltyp der Zelle auszugeben, die in dem digitalen Testbild abgebildet ist, wobei:
das Klassifizierermodell (1060) Folgendes umfasst:
ein Codierer-Teilmodell, das eine oder mehrere Faltungsschichten umfasst, wobei das Codierer-Teilmodell konfiguriert ist, um eine latente Darstellung (10662) der empfangenen Bilddaten (10660) in Form einer Vielzahl von latenten Variablen zu erzeugen; und
ein Zelltyp-Klassifizierungs-Teilmodell, das konfiguriert ist, um einen Zelltyp der Zelle zu bestimmen und auszugeben, die in dem digitalen Testbild abgebildet ist, basierend auf der latenten Darstellung (10662) der empfangenen Bilddaten (10660), die durch das Codierer-Teilmodell erzeugt wurden, wobei das Zelltyp-Klassifizierungs-Teilmodell eine oder mehrere vollständig verbundene Schichten umfasst; und
das Klassifizierermodell (1060) unter Verwendung von Trainingsdaten (1062) trainiert wurde, die eine Vielzahl von digitalen Aufzeichnungen umfassen, wobei jede digitale Aufzeichnung Folgendes umfasst:
Trainingsbilddaten, die ein digitales Trainingsbild darstellen, das eine Zelle abbildet; und
eine Kennzeichnung, die den Zelltyp der Zelle angibt, die in dem digitalen Trainingsbild abgebildet ist; und
Bestimmen (S204) eines oder mehrerer digitaler Referenzbilder (1064), die Zellen abbilden, die der Zelle am ähnlichsten sind, die in dem digitalen Testbild abgebildet ist, wobei Referenzbilder (1064) bereits existierende digitale Bilder sind, die eine Zelle abbilden;
Erzeugen (S206) von Anweisungen, die, wenn sie durch eine Anzeigekomponente einer Rechenvorrichtung ausgeführt werden, die Anzeigekomponente veranlassen, Folgendes anzuzeigen:
den Zelltyp, der durch das Klassifizierermodell (1060) ausgegeben wird; und
das bestimmte eine oder die bestimmten mehreren digitalen Referenzbilder (1064), die Zellen abbilden, die der Zelle am ähnlichsten sind, die in dem digitalen Testbild abgebildet ist,
**dadurch gekennzeichnet, dass** das Klassifizierermodell (1060) unter Verwendung von Spektralnormalisierung trainiert wurde.

2. Computerimplementiertes Verfahren nach Anspruch 1, wobei:
das Bestimmen (S204) eines oder mehrerer digitaler Referenzbilder (1064), die Zellen abbilden, die der Zelle am ähnlichsten sind, die in dem digitalen Testbild abgebildet ist, Folgendes umfasst:
Berechnen (S302) des Werts einer Ähnlichkeitsmetrik, die den Ähnlichkeitsgrad zwischen dem digitalen Testbild und jedem einer Vielzahl von digitalen Referenzbildern (1064) angibt; und
Auswählen einer Teilmenge der Vielzahl von digitalen Referenzbildern, für die der Wert der Ähnlichkeitsmetrik den höchsten Ähnlichkeitsgrad mit dem digitalen Testbild angibt, wobei die ausgewählte Teilmenge das eine oder die mehreren digitalen Referenzbilder (1064) ist, die Zellen abbilden, die der Zelle am ähnlichsten sind, die in dem digitalen Testbild abgebildet ist.

3. Computerimplementiertes Verfahren nach Anspruch 1 oder Anspruch 2, wobei:
das eine oder die mehreren Referenzbilder (1064) die Vielzahl von Trainingsbildern umfassen, die Teil der Trainingsdaten (1062) sind.

4. Computerimplementiertes Verfahren nach Anspruch 3, wobei:
die Vielzahl von digitalen Trainingsbildern eine erste Teilmenge von digitalen Trainingsbildern und eine zweite Teilmenge von digitalen Trainingsbildern umfasst; und
das Auswählen einer Teilmenge der Vielzahl von digitalen Trainingsbildern das Auswählen einer Teilmenge von digitalen Trainingsbildern nur aus der ersten Teilmenge von digitalen Trainingsbildern umfasst.

5. Computerimplementiertes Verfahren nach Anspruch 1, wobei:
die Ähnlichkeitsmetrik basierend auf der latenten Darstellung (10662) der empfangenen Bilddaten (10660) und einer latenten Darstellung (10662) der Referenzbilddaten, die jedes der digitalen Referenzbilder (1064) darstellen, berechnet wird.

6. Computerimplementiertes Verfahren nach Anspruch 5, wobei:
die Ähnlichkeitsmetrik für jedes digitale Referenzbild ein Abstand im *N-*dimensionalen Raum zwischen der latenten Darstellung (10662) der empfangenen Bilddaten (10660) und einer latenten Darstellung (10662) dieses digitalen Referenzbilds ist, wobei *N* die Anzahl von Dimensionen in der latenten Darstellung (10662) ist.

7. Computerimplementiertes Verfahren nach Anspruch 6, wobei:
der Abstand im *N*-dimensionalen Raum ein euklidischer Abstand, ein Manhattan-Abstand oder ein Cosinus-Abstand ist.

8. Computerimplementiertes Verfahren nach einem der Ansprüche 1 bis 7, wobei:
das Klassifizierermodell (1060) konfiguriert ist, um die Zelle als eines der Folgenden zu klassifizieren: ein Promyelozyt, ein Myelozyt, ein Metamyelozyt, ein stabkerniger Granulozyt, ein Neutrophil, ein Eosinophil, ein Basophil, ein Monozyt, ein Lymphozyt, ein anormaler Lymphozyt, ein atypischer Lymphozyt, ein Blast und ein kernhaltiges rotes Blutkörperchen.

9. Diagnoseunterstützungssystem (10) zum Identifizieren von Zelltypen innerhalb eines Probenbilds, wobei das Diagnoseunterstützungssystem (10) Folgendes umfasst:
einen Prozessor (104); und
eine Anzeigekomponente (302), wobei:
der Prozessor (104) konfiguriert ist, um das computerimplementierte Verfahren nach einem der Ansprüche 1 bis 8 auszuführen; und
der Prozessor (104) konfiguriert ist, um die erzeugten Anweisungen an die Anzeigekomponente (302) zu übertragen.

10. Computerimplementiertes Diagnoseunterstützungsverfahren, wobei das computerimplementierte Diagnoseunterstützungsverfahren Folgendes umfasst:
Empfangen von Bilddaten (10660), die ein Probenbild darstellen, das eine Vielzahl von Zellen abbildet, wobei die Bilddaten (10660) eine Vielzahl von Teilmengen von Bilddaten (10660) umfassen, wobei jede Teilmenge von Bilddaten (10660) einen Abschnitt des Probenbilds darstellt, das eine einzelne Zelle von Interesse abbildet;
Anwenden eines Codierers eines trainierten Klassifizierermodells (1060) auf jede der Teilmengen von Bilddaten (10660), wobei der Codierer eine oder mehrere Faltungsschichten umfasst, wobei der Codierer trainiert wurde, um eine jeweilige latente Darstellung (10662) jeder Teilmenge von Bilddaten (10660) in Form einer Vielzahl von latenten Variablen zu erzeugen;
Empfangen einer ersten Benutzereingabe, die eine Zelle in dem Probenbild oder eine Teilmenge von Bilddaten (10660) auswählt, die eine Zelle in dem Probenbild darstellt;
Bestimmen eines jeweiligen Werts einer Ähnlichkeitsmetrik, die den Ähnlichkeitsgrad zwischen der ausgewählten Teilmenge von Bilddaten (10660) oder der Teilmenge von Bilddaten (10660), die die ausgewählte Zelle darstellt, und jeder der anderen Teilmengen von Bilddaten (10660) angibt, basierend auf den jeweiligen latenten Darstellungen (10662) der Teilmengen von Bilddaten (10660);
Identifizieren einer oder mehrerer Teilmengen von Bilddaten (10660), für die die Ähnlichkeitsmetrik den höchsten Ähnlichkeitsgrad mit der ausgewählten Teilmenge von Bilddaten (10660) oder der Teilmenge von Bilddaten (10660), die die ausgewählte Zelle darstellt, angibt; und
Speichern von Daten, die die eine oder die mehreren Teilmengen von Bilddaten (10660) identifizieren, für die die Ähnlichkeitsmetrik den höchsten Ähnlichkeitsgrad mit der ausgewählten Teilmenge von Bilddaten (10660) oder der Teilmenge von Bilddaten (10660), die die ausgewählte Zelle darstellt, angibt, in einem Speicher,
**dadurch gekennzeichnet, dass** das Klassifizierermodell (1060) unter Verwendung von Spektralnormalisierung trainiert wurde.

11. Computerimplementiertes Verfahren nach Anspruch 10, wobei:
das trainierte Klassifizierermodell (1060) den Codierer umfasst, der eine oder mehrere Faltungsschichten und ein Zelltyp-Klassifizierungs-Teilmodell umfasst, das eine oder mehrere vollständig verbundene Schichten umfasst, wobei das Zelltyp-Klassifizierungs-Teilmodul konfiguriert ist, um einen Zelltyp der Zelle zu bestimmen und auszugeben, die in einem digitalen Testbild abgebildet ist, basierend auf einer latenten Darstellung (10662) der empfangenen Bilddaten (10660), die durch den Codierer erzeugt wurden;
das computerimplementierte Verfahren ferner Folgendes umfasst:
Anwenden des Zelltyp-Klassifizierungs-Teilmodells auf die ausgewählte Teilmenge von Bilddaten (10660) oder die Teilmenge von Bilddaten (10660), die die ausgewählte Zelle darstellt, die in der ersten Benutzereingabe angegeben ist;
Bestimmen, ob das Klassifizierungs-Teilmodell in der Lage ist, den Zelltyp der Zelle zu bestimmen, die durch die ausgewählte Teilmenge von Bilddaten (10660) oder die Teilmenge von Bilddaten (10660) dargestellt ist, die die ausgewählte Zelle darstellt, die in der ersten Benutzereingabe angegeben ist;
wenn das Klassifizierungs-Teilmodell nicht in der Lage ist, den Zelltyp zu bestimmen, Erzeugen von Anweisungen, die, wenn sie durch eine Anzeigekomponente einer Rechenvorrichtung ausgeführt werden, die Anzeigekomponente veranlassen, eine zweite Benutzereingabe anzufordern, die den Zelltyp identifiziert;
als Reaktion auf das Empfangen der zweiten Benutzereingabe, die den Zelltyp identifiziert, Abrufen der gespeicherten Daten, die die eine oder die mehreren Teilmengen von Bilddaten (10660) identifizieren, für die die Ähnlichkeitsmetrik den höchsten Ähnlichkeitsgrad mit der ausgewählten Teilmenge von Bilddaten (10660) oder der Teilmenge von Bilddaten (10660), die die ausgewählte Zelle darstellt, angibt;
Erzeugen von Anweisungen, die, wenn sie durch eine Anzeigekomponente einer Rechenvorrichtung ausgeführt werden, diese veranlassen, Folgendes anzuzeigen:
Bilder, die der identifizierten einen oder den identifizierten mehreren Teilmenge(n) von Bilddaten (10660) entsprechen, für die die Ähnlichkeitsmetrik den höchsten Ähnlichkeitsgrad mit der ausgewählten Teilmenge von Bilddaten (10660) oder der Teilmenge von Bilddaten (10660), die die ausgewählte Zelle darstellt, angibt; und
für jedes Bild, eine Anforderung für eine dritte Benutzereingabe, um zu bestätigen, ob dieses Bild als der gleiche Zelltyp klassifiziert werden sollte, der in der gleichen Klassifizierung angegeben ist, die in der zweiten Benutzereingabe empfangen wurde; und
Aktualisieren der Trainingsdaten (1062) basierend auf der Vielzahl von empfangenen dritten Benutzereingaben.

12. Computerimplementiertes Verfahren nach Anspruch 11, das ferner Folgendes umfasst:
Neutrainieren des Klassifizierermodells (1060) basierend auf den aktualisierten Trainingsdaten (1062).

## Revendications

1. Procédé mis en œuvre par ordinateur de classification de types cellulaires, le procédé mis en œuvre par ordinateur comprenant :
la réception (S200) de données d'image (10660) représentant une image de test numérique, l'image de test numérique représentant une cellule ;
l'application (S202) d'un modèle de classifieur (1060) aux données d'image (10660) reçues, le modèle de classifieur (1060) étant configuré pour fournir en sortie un type cellulaire de la cellule illustrée dans l'image de test numérique, dans lequel :
le modèle de classifieur (1060) comprend :
un sous-modèle d'encodeur comprenant une ou plusieurs couches de convolution, le sous-modèle d'encodeur étant configuré pour générer une représentation latente (10662) des données d'image (10660) reçues en termes d'une pluralité de variables latentes ; et
un sous-modèle de classification de types cellulaires configuré pour déterminer et fournir en sortie un type cellulaire de la cellule illustrée dans l'image de test numérique sur la base de la représentation latente (10662) des données d'image (10660) reçues générée par le sous-modèle d'encodeur, le sous-modèle de classification de types cellulaires comprenant une ou plusieurs couches entièrement connectées ; et
le modèle de classifieur (1060) a été entraîné en utilisant des données d'entraînement (1062) comprenant une pluralité d'enregistrements numériques, chaque enregistrement numérique comprenant :
des données d'image d'entraînement représentant une image d'entraînement numérique illustrant une cellule ; et
une étiquette indiquant le type cellulaire de la cellule illustrée dans l'image d'entraînement numérique ; et
la détermination (S204) d'une ou de plusieurs images de référence numériques (1064) illustrant les cellules les plus similaires à la cellule illustrée dans l'image de test numérique, les images de référence (1064) étant des images numériques préexistantes illustrant une cellule ;
la génération (S206) d'instructions qui, lorsqu'elles sont exécutées par un composant d'affichage d'un dispositif informatique, amènent le composant d'affichage à afficher :
le type cellulaire fourni en sortie par le modèle de classifieur (1060) ; et
la ou les images de référence numériques (1064) déterminées illustrant les cellules les plus similaires à la cellule illustrée dans l'image de test numérique,
**caractérisé en ce que** le modèle de classifieur (1060) a été entraîné en utilisant une normalisation spectrale.

2. Procédé mis en œuvre par ordinateur selon la revendication 1, dans lequel :
la détermination (S204) d'une ou de plusieurs images de référence numériques (1064) illustrant les cellules les plus similaires à la cellule illustrée dans l'image de test numérique comprend :
le calcul (S302) de la valeur d'une mesure de similarité indiquant le degré de similarité entre l'image de test numérique et chacune d'une pluralité d'images de référence numériques (1064) ; et
la sélection d'un sous-ensemble de la pluralité d'images de référence numériques pour lequel la valeur de la mesure de similarité indique le degré de similarité le plus élevé avec l'image de test numérique, le sous-ensemble sélectionné étant la ou les images de référence numériques (1064) illustrant les cellules les plus similaires à la cellule illustrée dans l'image de test numérique.

3. Procédé mis en œuvre par ordinateur selon la revendication 1 ou la revendication 2, dans lequel :
la ou les images de référence (1064) comprennent la pluralité d'images d'entraînement formant une partie des données d'entraînement (1062).

4. Procédé mis en œuvre par ordinateur selon la revendication 3, dans lequel :
la pluralité d'images d'entraînement numériques comprend un premier sous-ensemble d'images d'entraînement numériques et un second sous-ensemble d'images d'entraînement numériques ; et
la sélection d'un sous-ensemble de la pluralité d'images d'entraînement numériques comprend la sélection d'un sous-ensemble d'images d'entraînement numériques à partir du premier sous-ensemble d'images d'entraînement numériques uniquement.

5. Procédé mis en œuvre par ordinateur selon la revendication 1, dans lequel :
la mesure de similarité est calculée sur la base de la représentation latente (10662) des données d'image (10660) reçues et d'une représentation latente (10662) des données d'images de référence représentant chacune des images de référence numériques (1064).

6. Procédé mis en œuvre par ordinateur selon la revendication 5, dans lequel :
pour chaque image de référence numérique, la mesure de similarité est une distance dans un espace *N*-dimensionnel entre la représentation latente (10662) des données d'image (10660) reçues et une représentation latente (10662) de cette image de référence numérique, dans lequel *N* est le nombre de dimensions dans la représentation latente (10662).

7. Procédé mis en œuvre par ordinateur selon la revendication 6, dans lequel :
la distance dans l'espace *N*-dimensionnel est une distance euclidienne, une distance de Manhattan ou une distance cosinus.

8. Procédé mis en œuvre par ordinateur selon l'une quelconque des revendications 1 à 7, dans lequel :
le modèle de classifieur (1060) est configuré pour classifier la cellule comme étant une parmi : un promyélocyte, un myélocyte, un métamyélocyte, un neutrophile en bande, un neutrophile, un éosinophile, un basophile, un monocyte, un lymphocyte, un lymphocyte anormal, un lymphocyte atypique, un blaste et un globule rouge nucléé.

9. Système d'aide au diagnostic (10) pour identifier des types cellulaires au sein d'une image d'échantillon, le système d'aide au diagnostic (10) comprenant :
un processeur (104) : et
un composant d'affichage (302), dans lequel :
le processeur (104) est configuré pour exécuter le procédé mis en œuvre par ordinateur selon l'une quelconque des revendications 1 à 8 ; et
le processeur (104) est configuré pour transmettre les instructions générées au composant d'affichage (302).

10. Procédé d'aide au diagnostic mis en œuvre par ordinateur, le procédé d'aide au diagnostic mis en œuvre par ordinateur comprenant :
la réception de données d'image (10660) représentant une image d'échantillon illustrant une pluralité de cellules, les données d'image (10660) comprenant une pluralité de sous-ensembles de données d'image (10660), chaque sous-ensemble de données d'image (10660) représentant une partie de l'image d'échantillon illustrant une seule cellule d'intérêt ;
l'application d'un encodeur d'un modèle de classifieur (1060) entraîné, l'encodeur comprenant une ou plusieurs couches de convolution, à chacun des sous-ensembles de données d'image (10660), dans lequel l'encodeur a été entraîné pour générer une représentation latente (10662) respective de chaque sous-ensemble de données d'image (10660) en termes d'une pluralité de variables latentes ;
la réception d'une première entrée utilisateur sélectionnant une cellule dans l'image d'échantillon ou un sous-ensemble de données d'image (10660) représentant une cellule dans l'image d'échantillon ;
la détermination d'une valeur respective d'une mesure de similarité indiquant le degré de similarité entre le sous-ensemble de données d'image (10660) sélectionné ou le sous-ensemble de données d'image (10660) représentant la cellule sélectionnée, et chacun des autres sous-ensembles de données d'image (10660), sur la base des représentations latentes (10662) respectives des sous-ensembles de données d'image (10660) ;
l'identification d'un ou de plusieurs sous-ensembles de données d'image (10660) pour lesquels la mesure de similarité indique le degré de similarité le plus élevé avec le sous-ensemble de données d'image (10660) sélectionné ou le sous-ensemble de données d'image (10660) représentant la cellule sélectionnée ; et
le stockage, dans une mémoire, de données identifiant le ou les sous-ensembles de données d'image (10660) pour lesquels la mesure de similarité indique le degré de similarité le plus élevé avec le sous-ensemble de données d'image (10660) sélectionné ou le sous-ensemble de données d'image (10660) représentant la cellule sélectionnée,
**caractérisé en ce que** le modèle de classifieur (1060) a été entraîné en utilisant une normalisation spectrale.

11. Procédé mis en œuvre par ordinateur selon la revendication 10, dans lequel :
le modèle de classifieur (1060) entraîné comprend l'encodeur comprenant une ou plusieurs couches de convolution et un sous-modèle de classification de types cellulaires comprenant une ou plusieurs couches entièrement connectées, le sous-module de classification de types cellulaires étant configuré pour déterminer et fournir en sortie un type cellulaire de la cellule illustrée dans une image de test numérique sur la base d'une représentation latente (10662) des données d'image (10660) reçues générée par l'encodeur ;
le procédé mis en œuvre par ordinateur comprend en outre :
l'application du sous-modèle de classification de types cellulaires au sous-ensemble de données d'image (10660) sélectionné ou au sous-ensemble de données d'image (10660) représentant la cellule sélectionnée indiquée dans la première entrée utilisateur ;
la détermination si le sous-modèle de classification est capable de déterminer le type cellulaire de la cellule représentée par le sous-ensemble de données d'image (10660) sélectionné ou le sous-ensemble de données d'image (10660) représentant la cellule sélectionnée indiquée dans la première entrée utilisateur ;
si le sous-modèle de classification n'est pas capable de déterminer le type cellulaire, la génération d'instructions qui, lorsqu'elles sont exécutées par un composant d'affichage d'un dispositif informatique, amènent le composant d'affichage à demander une deuxième entrée utilisateur identifiant le type cellulaire ;
en réponse à la réception de la deuxième entrée utilisateur identifiant le type cellulaire, la récupération des données stockées identifiant le ou les sous-ensembles de données d'image (10660) pour lesquels la mesure de similarité indique le degré de similarité le plus élevé avec le sous-ensemble de données d'image (10660) sélectionné ou le sous-ensemble de données d'image (10660) représentant la cellule sélectionnée ;
la génération d'instructions qui, lorsqu'elles sont exécutées par un composant d'affichage d'un dispositif informatique, l'amènent à afficher :
des images correspondant au ou aux sous-ensembles de données d'image (10660) identifiés pour lesquels la mesure de similarité indique le degré de similarité le plus élevé avec le sous-ensemble de données d'image (10660) sélectionné ou le sous-ensemble de données d'image (10660) représentant la cellule sélectionnée ; et
pour chaque image, une demande d'une troisième entrée utilisateur afin de confirmer si cette image doit être classifiée comme étant du même type cellulaire qu'indiqué dans la même classification reçue dans la deuxième entrée utilisateur ; et
la mise à jour des données d'entraînement (1062) sur la base de la pluralité de troisièmes entrées utilisateur reçues.

12. Procédé mis en œuvre par ordinateur selon la revendication 11, comprenant en outre :
le réentraînement du modèle de classifieur (1060) sur la base des données d'entraînement (1062) mises à jour.
